(19) Europäisches Patentamt
European Patent Office
Office européen des brevets

(11) Publication number: **0 024 811**
**B1**

(12) **EUROPEAN PATENT SPECIFICATION**

(45) Date of publication of patent specification: **08.06.83**

(51) Int. Cl.³: **C 09 D 3/72**

(21) Application number: **80302521.2**

(22) Date of filing: **24.07.80**

# (54) Coating compositions based on epoxide adducts and polyurethane prepolymers.

(30) Priority: **06.08.79 US 64293**
**25.02.80 US 124016**

(43) Date of publication of application:
**11.03.81 Bulletin 81/10**

(45) Publication of the grant of the patent:
**08.06.83 Bulletin 83/23**

(84) Designated Contracting States:
**BE DE FR GB IT NL**

(56) References cited:
**DE - A - 2 247 696**

(73) Proprietor: **MOBIL OIL CORPORATION**
**150 East 42nd Street**
**New York New York 10017 (US)**

(72) Inventor: **Ilaria, Joseph Edward**
**511 Gallows Hill Road**
**Cranford, New Jersey (US)**

(74) Representative: **West, Alan Harry et al,**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 024 811 B1

Coating compositions based on epoxide adducts and polyurethane prepolymers.

This invention is concerned with an elastomeric urethane coating two-component system that is particularly adapted for coating surfaces subject to abrasion, such as railroad hopper cars, mining equipment, solid hoppers, conveyors and the like.

Insofar as is now known a spray applied coating of this invention has not been proposed. US—A—3,629,167 discloses a similar epoxy resin composition but without the isocyanate terminated long chain flexible component used in the present compositions. Reference is also directed to DE—A—2,247,696 which discloses a heat curable, epoxy resin based wating system.

The present invention provides a two-component coating composition in which:

(1) Component A comprises an adduct of a diglycidyl ether of bisphenol A (DGEBA), having an epoxy equivalent weight from 170 to 2,000, polyfunctional acid, and a mixture of high base strength aliphatic amine and low base strength aromatic amine;

(2) Component B comprises a urethane prepolymer based on flexible polyhydroxy functional oligomers and toluene diisocyanate or isophorone diisocyanate;

(3) The volume ratio of Component A: Component B is from 1:3 to 3:1.

The coating composition of this invention is composed of two components which are mixed just prior to application. After mixing the components, the composition has a pot life of about 2 hours. In practice, the mixed components are suitably applied with an airless pump to a clean (preferably prime-coated) metal surface at a film thickness of the order of 80 $\mu m$ wet and 50 $\mu m$ dry. The coating is particularly useful for coating the surfaces which are subjected to severe abrasion conditions by the cargo carried (coal, gravel, sand, dolomite, etc.) as well as to corrosives, such as those generated by wet coal, phosphate rock, and the like.

Component A

This component contains a modified epoxy resin and, in addition, normally contains the pigments, an extender (a magnesium silicate talc extender), and suitable solvents.

The epoxy resins are the diglycidyl ethers of bisphenols, a class of compounds which are constituted by a pair of phenolic groups interlinked through an intervening aliphatic bridge. While any of the bisphenols may be used to form the resin, the compound 2,2-bis (p-hydroxyphenyl) propane, commonly known as bisphenol A, is more widely available in commerce and is preferred.

The epoxy resins will have an epoxy equivalent weight of from 170 to 2,000, preferably 185 to 210 and an epoxy value from 0.60 to 0.05. The preferred epoxy resins, i.e., those made from bisphenol A, will have two epoxy groups per molecule.

The polyfunctional acid reacted with the epoxy resin may be an aliphatic dicarboxylic acid having the structure $HOOC(CH_2)_nCOOH$, where n is 2—8. Suitable aliphatic dicarboxylic acids include adipic acid, pimelic acid, suberic acid, azelaic acid, and sebacic acid.

It is also possible to use dimerized unsaturated fatty acids up to and including 36 carbon atom dimer acids and diacids resulting from the Diels-Alder reaction of acrylic acid or methacrylic acid with conjugated unsaturated fatty acids having up to 18 carbon atoms, e.g.,

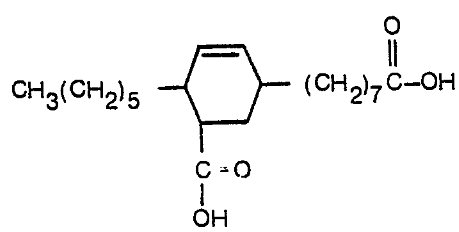

Other suitable polyfunctional acids are the acid terminated polyesters containing at least about 40% of components derived from $C_4$—$C_9$ alkanedioic acids and carboxylic acid terminal polybutadiene and copolymers of butadiene with acrylonitrile.

The high base strength amines are the aliphatic amines. Suitable aliphatic amines include the aliphatic and cycloaliphatic, primary, secondary and tertiary amines, preferably containing up to 15 carbon atoms, such as methylamine, ethylamine, propylamine, isopropylamine, butylamine, isobutylamine, sec-butylamine, tert-butylamine, amylamine, isoamylamine, sec-amylamine, tert-amylamine, hexylamine, heptylamine, diisopropylamine, dibutylamine, diisobutylamine, trimethylamine, triethylamine, tripropylamine, tributylamine, triisobutylamine, cyclohexylamine, and cycloheptylamine.

The low base strength amines are the aromatic amines. Suitable aromatic amines include the primary, secondary and tertiary amines such as aniline, ortho-, meta-, paratoluidine, the xylidines, the phenylene-diamines, N-methylaniline, N-ethylaniline, dimethylaniline, triphenylamine, alpha-naphthylamine, beta-naphthylamine, pyridine and substituted pyridines and benzylamine.

The epoxy resin is reacted with the polyfunctional acid, the high base strength amine, and the low base strength amine in an amount to react with 0.5 to all the epoxy groups. The amount of

polyfunctional acid reacted is 0.1—0.6 equivalent per 1.0 equivalent of epoxy resin. The amount each of the high base strength amine and of the low base strength amine reacted is 0.1—0.6 equivalent per 1.0 equivalent of epoxy resin. The weight ratio of the high base strength to the low base strength amine can be between about 2:1 and about 1.2 depending upon the desired rate of cure for the intended application.

Although a catalyst is not essential, it may be desired to use a suitable catalyst in the reaction between the epoxy resin and the polyfunctional acid. Suitable catalysts are tertiary amines, tertiary phosphines, and quaternary ammonium and phosphonium compounds.

The polyfunctional acid, the low base strength amine, and the high base strength amine are readily adducted to the epoxy resin, usually in sequence, at temperatures in the order of about 163°C (325°F) in 2—3 hours.

The modified epoxy resin product generally constitutes 15 to 25 weight percent of Component A solids. Component A usually contains the pigments, extenders, curing catalysts and a solvent. Suitable pigments include carbon black, titanium dioxide, zinc oxide, bentonite, silica, ochers, chrome yellows and greens. The pigment may be chosen for its protective properties as well as its color. The amount of pigment may vary but generally is in the range of 3 to 10 weight percent of the total solids in the composition.

A preferred extender is magnesium silicate talc, generally present in amounts of 60 to 80 weight percent based on solids.

The curing catalysts present in Component A are of the type used for curing polyurethane coating systems. These catalysts are generally organic tin compounds such as dibutyl tin dilaurate, dibutyl tin diacetate, stanous octoate or stannous stearate. Only small, catalytic amounts of these materials are required.

Other ingredients may also be present for example, bodying or viscosity control agents, inhibitors such as corrosion inhibitors and so forth. Suitable materials of these types are well known and available commercially e.g., the colloidal silica viscosity control agents sold under the trademark "Thixatrol."

A preferred solvent system is a ketone-based mixture which also contains a lower alkyl ester and an aromatic hydrocarbon. The preferred ketone is methyl ethyl ketone (MEK) although other ketones such as acetone may also be used. Suitable esters include ethyl acetate and ethyl butyrate. Suitable aromatic hydrocarbons include toluene, ethylbenzene and the xylenes. Of these, toluene is preferred. If desired, an ester of an alkoxyalcohol may be present, for example, methoxyethyl acetate or ethoxyethyl acetate. The total amount of solvent used is generally sufficient to give a solids content of 60 to 70 weight percent for Component A. A preferred solvent system comprises 15—20 percent alkoxyethyl acetate, e.g., ethoxyethyl acetate, 60—65 percent alkyl ketone, e.g., MEK, 5—10 percent ethyl acetate, and 10—15 percent aromatic hydrocarbons, e.g., toluene.

Component B

Component B comprises a flexible urethane prepolymer. This prepolymer is prepared by the reaction of a diisocyanate with a polyol. The preferred diisocyanates are toluene diisocyanate (tolylene diisocyanate) and isophorone diisocyanate. The polyol is selected to produce a flexible (as distinct from a rigid) urethane reaction product.

Generally, these polyols are linear, dihydroxy compounds (diols), although a slight degree of chain branching (a higher hydroxy functionality) will not be objectionable. These polyols are usually oligomers with terminal hydroxyl groups. They are suitably materials of the following types:

(i) Hydroxy-terminated polyethers, i.e., polyalkylene oxides formed by polymerization of ethylene, propylene or butylene oxides. These materials may also be copolymerized with minor amounts of polyols such as trimethylolethane, trimethylol propane, glycerol or pentaerythritol to form slightly branched structures.

(ii) Hydroxy-terminated polyesters preferably polyesters containing at least 40 percent of components derived from $C_4$ to $C_9$ alkanediols and alkanedioic acids.

(iii) Hydroxy-terminated polybutadienes.

The diisocyanate is reacted with the polyol so as to preserve residual isocyanate functionality in the urethane product. Generally, it is preferred to produce a prepolymer product with isocyanate end groups which subsequently react with the modified epoxy resin of Component A. Such prepolymers may be obtained by reacting one of the isocyanate groups of the diisocyanate with the terminal hydroxy group at each end of the polyol. This selective reacting may be carried out by using two moles of the diisocyanate with one mole of the flexible, hydroxy terminated oligomer.

The residual isocyanate content of the urethane prepolymer is generally in the range of 5 to 15, preferably 5 to 10 weight percent. Because the isocyanate groups are readily reactive with water and other active hydrogen containing materials, it is desirable to keep Component B out of contact with moisture and any other materials which might react with the isocyanate end groups. Because of this, it is desirable to include the pigment in Component A as previously mentioned because pigments generally contain residual quantities of moisture which could react with the isocyanate.

The final coating composition is prepared by mixing Component A with Component B in a volume ratio of from 1:3 to 3:1, preferably about 3:2. The mixed composition has a pot life of about 2 hours. It

may be applied in the manner previously described.

The invention is illustrated by the following Example in which all parts are by weight unless the contrary is stated.

Component A

The modified epoxy resin was prepared using the following formula:

| | Wt. Percent |
|---|---|
| DGEBA | 39.66 |
| Dimer acid ($C_{36}$ dibasic acid) | 11.19 |
| Aniline | 3.33 |
| Cyclohexylamine | 2.21 |
| Ethoxyethyl acetate | 26.20 |
| Ethylbenzene | 17.41 |
| | 100.00 |

The equivalent weight ratio of the DGEBA: dimer acid: aniline cyclohexylamine was 1:0.2:0.4:0.2.

Procedure:

1. Charge DGEBA epoxy resin (epoxy equivalent weight about 193—203 trademark Epon 829) and dimer acid (Empol 1016 trademark) to a kettle equipped with agitation and inert gas supply.
2. Raise temperature to about 163°C and hold for 45 minutes.
3. Remove heat and begin addition of the aniline at a steady rate over a 15 minute period. After addition of the aniline, add the cyclohexylamine, also over a 15 minute period.
4. Hold the reaction mixture for 90 minutes at 163°C after complete addition of the cyclohexylamine.
5. Reduce to 55% solids with ethoxyethyl acetate (Cellosolve acetate-trademark) and ethylbenzene 60/40 wt.%. Maintain the temperature above 121°C during the addition of the solvents.

The modified DGEBA is then mixed with the pigment, magnesium silicate talc extender, and solvent (MEK) about 7—10 weight percent on solids as follows:

The following ingredients were added in the order shown and mixed at a high speed:

243.7 parts of the modified DGEBA,
30.6 parts lampblack pigment,
435.5 parts magnesium silicate talc extender,
62.8 parts MEK,
16.7 parts surfactant,
25.5 parts Thixatrol (trademark) viscosity control agent.

After mixing, the materials were ground to NS4, taking care that the temperature did not exceed 57°C. If necessary, the material was cooled with solvent described below.

The material after grinding was mixed with the following solvent mixture:

203.1 parts MEK,
10 parts toluene
31.4 parts ethyl acetate and
10.4 parts dibutyl tin dilaurate (5% in MEK).

The final composition, which is Component A, had 60% solids.

Component B

This component was dihydroxy oligomer produced by reacting two moles of toluene diisocyanate with one mole of an aliphatic polyether diol derived from the polymerization of alkylene oxide e.g., ethylene oxide or propylene oxide. The residual isocyanate content of the prepolymer was 6.0 ± 0.4 weight percent, and it had a molecular weight of about 625—720.

Component A was mixed with Component B in a volume ratio of 3:2. This composition contains about 71.7 percent by weight solids and has a viscosity of 85 ± 5 KU.

When applied to a clean steel surface at a 50 micron dry film thickness, the coating was tack free

after drying overnight. It has a gloss of 40 percent and had the following physical properties:

| | |
|---|---|
| Tensile | 800—1200 psi |
| Elongation | 150—300% |
| Abrasion Resistance | Higher than can be with conventional paint testing equipment. |

**Claims**

1. A two-component coating composition comprising a first component, Component A, and a second component, Component B, in which

(a) Component A comprises an adduct of a diglycidyl ether of bisphenol A, having an epoxy equivalent weight from 170 to 2,000, a polyfunctional acid, and a mixture of high base strength aliphatic amine and low base strength aromatic amine; and

(b) Component B comprises a urethane prepolymer derived from a flexible polyhydroxy functional oligomer and a diisocyanate.

2. A composition according to Claim 1 in which Component A and Component B are admixed for application in a volume ratio from 1.3 to 3.1.

3. A composition according to Claim 1 or 2 in which the diglycidyl ether of Component A has an epoxy equivalent weight from 185 to 210.

4. A composition according to any of Claims 1 to 3 in which the high base strength amine is cyclohexylamine.

5. A composition according to any of Claims 1 to 4 in which the low base strength amine is aniline.

6. A composition according to any of Claims 1 to 5 in which the polyfunctional acid is a dibasic dimer acid.

7. A composition according to any of Claims 1 to 6 in which Component B is a urethane prepolymer derived from a hydroxy-terminated polyether reacted with toluene diisocyanate.

8. A composition according to Claim 7 in which the urethane prepolymer is derived from a hydroxy-terminated substantially linear polyether reacted with toluene diisocyanate in a molar ratio of 1:2.

9. A composition according to any of Claims 1 to 8 in which Component A includes pigment, magnesium silicate talc extender and solvent.

**Revendications**

1. Une composition de revêtement à deux composants comprenant un premier composant, le composant A, et un second composant, le composant B, dans laquelle:

(a) le composant A comprend un produit d'addition d'un éther diglycidylique du bisphénol A ayant un poids équivalent en époxy de 170 à 2,000, d'un acide polyfonctionnel et d'un mélange d'une amine aliphatique fortement basique et d'une amine aromatique faiblement basique; et

(b) le composant B comprend un prépolymère d'uréthane dérivant d'un oligomère fonctionnel polyhydroxylé flexible et d'un diisocyanate.

2. Une composition selon la revendication 1, dans laquelle le composant A et le composant B sont mélangés pour l'application dans un rapport en volume de 1/3 à 3/1.

3. Une composition selon la revendication 1 ou la revendication 2, dans laquelle l'éther diglycidylique du composant A a un poids équivalent en époxy de 185 à 210.

4. Une composition selon l'une quelconque des revendications 1 à 3, dans laquelle l'amine fortement basique est la cyclohexylamine.

5. Une composition selon l'une quelconque des revendications 1 à 4, dans laquelle l'amine faiblement basique est l'aniline.

6. Une composition selon l'une quelconque des revendications 1 à 5, dans laquelle l'acide polyfonctionnel est un acide dimère diacide.

7. Une composition selon l'une quelconque des revendications 1 à 6, dans laquelle le composant B est un prépolymère d'uréthane dérivant d'un polyéther à terminaison hydroxy entré en réaction avec le diisocyanate de toluène.

8. Une composition selon la revendication 7, dans laquelle le prépolymère d'uréthane dérive d'un polyéther essentiellement linéaire à terminaison hydroxy entré en réaction avec le diisocyanate de toluène dans un rapport molaire de 1/2.

9. Une composition selon l'une quelconque des revendications 1 à 8, dans laquelle le composant A comprend un pigment, une charge de silicate de magnésium sous forme de talc et un solvant.

**Patentansprüche**

1. Eine zweikomponentige Beschichtungszusammensetzung, die eine erste Komponente, Komponente A, und eine zweite Komponente, Komponente B, umfaßt, bei der

(a) die Komponente A ein Addukt eines Diglycidylethers von Bisphenol A, das ein Epoxy-Äquivalentgewicht von 170 bis 2000 aufweist, eine polyfunktionelle Säure und eine Mischung eines aliphatischen Amins einer hohen Basenstärke und eines aromatischen Amins geringer Basenstärke umfaßt; und

(b) Komponente B ein Urethan-Prepolymeres umfaßt, das sich von einem flexiblem funktionellen Polyhydroxy-Oligomeren und einem Diisocyanat ableitet.

2. Eine Zusammensetzung nach Anspruch 1, bei der die Komponente A und die Komponente B zum Zwecke der Anwendung in einem Volumenverhältnis von 1,3 bis 3,1 miteinander vermischt sind.

3. Eine Zusammensetzung nach Anspruch 1 oder 2, bei der der Diglycidylether der Komponente A ein Epoxy-Äquivalentgewicht von 185 bis 210 aufweist.

4. Eine Zusammensetzung nach einem der Ansprüche 1 bis 3, bei der das Amin hoher Basenstärke Cyclohexylamin ist.

5. Eine Zusammensetzung nach einem der Ansprüche 1 bis 4, bei der das Amin niedriger Basenstärke Anilin ist.

6. Eine Zusammensetzung nach einem der Anprüche 1 bis 5, bei der die polyfunktionelle Säure eine zweibasische dimere Säure ist.

7. Eine Zusammensetzung nach einem der Ansprüche 1 bis 6, bei der die Komponente B ein Urethan-Prepolymeres ist, das bei der Umsetzung eines Polyethers mit endständigen Hydroxy-Gruppen mit Toluoldiisocyanat erhalten wurde.

8. Eine Zusammensetzung nach Anspruch 7, bei der das Urethan-Prepolymere aus der Umsetzung eines im wesentlichen linearen Polyethers mit Hydroxy-Endgruppen mit Toluoldiisocyanat in einem molaren Verhältnis von 1:2 erhalten wurde.

9. Eine Zusammensetzung nach einem der Ansprüche 1 bis 8, bei der die Komponente A ein Pigment, ein Magnesiumsilikat-Talk-Streckmittel und ein Lösungsmittel umfaßt.